# FASCICULE DE BREVET EUROPEEN

(11) **EP 3 044 487 B1**
(45) Date de publication et mention de la délivrance du brevet: **29.03.2017**
(21) Numéro de dépôt: 14735626.5
(22) Date de dépôt: 13.06.2014
(51) Int. Cl.: F16K 1/20, F02M 25/00, F02D 9/10, F16K 11/052, F02M 26/70

(54) **VANNE, NOTAMMENT POUR MOTEUR THERMIQUE**
VENTIL, INSBESONDERE FÜR EINE WÄRMEKRAFTMASCHINE
VALVE, IN PARTICULAR FOR A HEAT ENGINE

(30) Priorité: 20.06.2013 FR 1355818
(43) Date de publication de la demande: 20.07.2016
(73) Titulaire: Valeo Systèmes De Contrôle Moteur, 95800 Cergy Saint Christophe (FR)
(72) Inventeur: MARTIN, Nicolas, F-78600 Maisonslafitte (FR); HODEBOURG, Grégory, F-78500 Sartrouville (FR); CRAVO, David, F-95520 Osny (FR)
(74) Mandataire: Tran, Chi-Hai
(86) Numéro de dépôt international: PCT/FR2014/051464
(87) Numéro de publication internationale: WO 2014/202882

(56) Documents cités:
- WO-A1-2004/067931
- WO-A1-2010/000752
- WO-A1-2012/001286
- WO-A1-2012/030222
- DE-A1- 2 427 995
- FR-A1- 2 271 471
- FR-A1- 2 838 801
- US-A- 2 439 861
- US-A- 4 121 607
- US-A1- 2008 237 521

## Description

La présente invention concerne une vanne, notamment pour moteur thermique.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Dans le cas d'une vanne comprenant :
- un corps dans lequel est ménagé un conduit dans lequel transite un fluide, et
- un volet monté mobile dans le corps entre une position ouverte et une position fermée dans lequel il doit obturer le conduit,
des problèmes de fuite de la vanne lorsque le volet est en position fermée existent. Pour y remédier, il est connu d'utiliser un joint interposé entre le corps et le volet lorsque ce dernier est dans la position fermée. Néanmoins, un tel joint est susceptible de se dilater du fait des fortes températures pouvant être atteintes dans l'environnement dans lequel il se trouve.

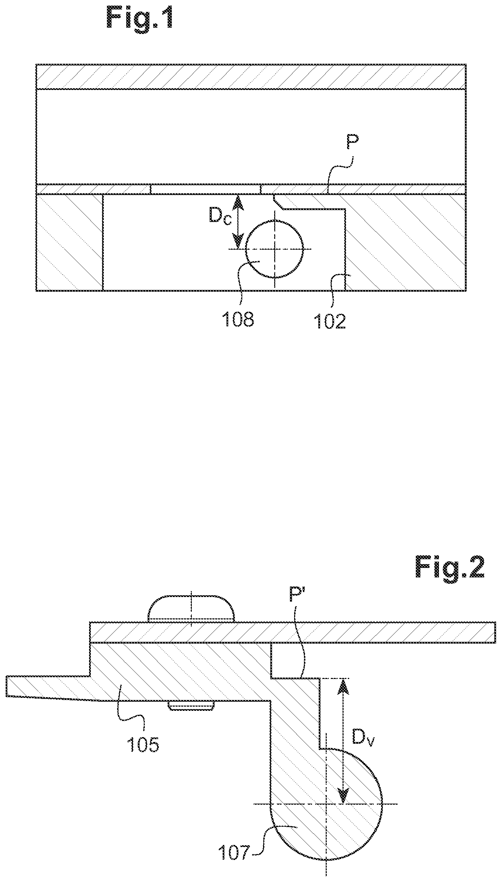

Une autre solution pour remédier à ce problème lié à l'emploi d'un joint est d'amener directement le volet en contact avec le corps lorsque le volet est en position fermée. Néanmoins, une contrainte dimensionnelle entre le volet et la partie du conduit dans laquelle il se déplace doit être respectée pour éviter que le volet ne vienne se coincer contre la paroi de ladite partie du conduit avant d'avoir atteint la position fermée, comme cela va être décrit en référence aux figures 1 et 2.

Sur ces figures, le corps 102 présente un plan de joint P venant au contact d'un plan de joint P' du volet 105 lorsque le volet est dans la position fermée pour obturer le conduit ménagé dans le corps 102. Du fait du caractère rigide des contacts entre le volet et le corps, on constate que le coincement du volet 105 contre la paroi du corps 102 est évité lorsque la distance Dv, mesurée entre le centre de l'arbre 107 permettant le pivotement du volet 105 dans le corps 102 et le plan de joint P' du volet 105, est inférieure ou égale à la distance Dc, mesurée entre le centre du logement 108 du corps 102 dans lequel est reçu l'arbre 107 et le plan de joint P du corps 102.

Cette contrainte dimensionnelle doit en outre être majorée, pour tenir compte des imprécisions sur les cotes des différentes pièces de la vanne lors de la fabrication de celle-ci. Du fait de cette majoration, des sections vides relativement importantes peuvent exister entre le corps et le volet lorsque le volet est dans la position fermée, ces sections vides, encore appelées « sections de fuite », pouvant occasionner des fuites supérieures à ce qui peut être toléré lorsque le volet est dans la position fermée.

WO 2012/030222 divulgue une vanne, notamment pour moteur thermique, comprenant:
- un corps dans lequel sont ménagés : un logement dans lequel est disposé au moins un palier, et un conduit apte à être parcouru par un fluide, et
- un volet monté pivotant dans le corps par un arbre reçu avec jeu radial dans le palier
- le volet pivotant entre:
   - une position ouverte, et
   - une position fermée dans laquelle il vient en contact avec le corps par une première zone de contact du volet située d'un premier côté de l'arbre et par une deuxième zone de contact du volet située d'une deuxième côté de l'arbre opposé audit premier côté, le palier étant configuré pour permettre un déplacement radial de l'arbre dans le palier lors du passage du volet de la position ouverte à la position fermée.

La demande déposée en France le 10 octobre 2012 par la Demanderesse sous le numéro 1259688 enseigne de ménager du jeu dans le ou les paliers par l'intermédiaire desquels l'arbre est reçu dans le logement et d'utiliser ce jeu pour permettre un déplacement radial de l'arbre dans le logement lorsque le volet passe de la position ouverte à la position fermée.

Néanmoins, ce déplacement radial tend à éloigner l'arbre de l'une des parois du conduit, de sorte qu'en position fermée, des sections de fuite de taille relativement importante apparaissent entre le volet et la paroi du conduit, affectant alors l'étanchéité du volet en position fermée. Par exemple, dans le cas où le logement recevant l'arbre a une section transversale circulaire, le déplacement radial peut se faire selon un rayon quelconque. En fonction du rayon selon lequel a lieu ce déplacement, la compensation des différences éventuelles entre les distances Dc et Dv ci-dessus peut s'accompagner d'un déplacement de l'arbre ayant pour effet d'augmenter les sections de fuite existant entre le volet et le corps de la vanne lorsque le volet est en position fermée.

Il existe un besoin pour bénéficier d'une vanne remédiant aux inconvénients ci-dessus.

Selon l'un de ses aspects, l'invention répond à ce besoin à l'aide d'une vanne, notamment pour moteur thermique, comprenant :
- un corps dans lequel sont ménagés : un logement dans lequel est disposé au moins un palier, et un conduit apte à être parcouru par un fluide, et
- un volet monté pivotant dans le corps par un arbre reçu avec jeu radial dans le palier,
- au moins un organe de rappel fixé au corps,
le volet pivotant entre :
- une position ouverte, et
- une position fermée dans laquelle il vient en contact avec le corps par une première zone de contact du volet située d'un premier côté de l'arbre et par une deuxième zone de contact du volet située d'un deuxième côté de l'arbre opposé audit premier côté,
le palier étant configuré pour permettre un déplacement radial de l'arbre dans le palier lors du passage du volet de la position ouverte à la position fermée, et
l'organe de rappel étant configuré pour guider ledit déplacement radial de l'arbre selon une direction prédéterminée.

La direction prédéfinie permet d'éviter le coincement du volet contre la paroi du conduit lorsque le volet passe dans la position fermée sans qu'il soit nécessaire de respecter des contraintes dimensionnelles trop exigeantes entre le volet et la partie du conduit dans laquelle il se déplace tout en évitant l'augmentation des sections de fuite lorsque le volet est en position fermée.

Selon un premier mode de réalisation selon la revendication 1, la vanne comporte au moins une came formée par une pièce solidaire de l'arbre, l'organe de rappel étant configuré pour venir au contact de ladite came pour guider ledit déplacement radial de l'arbre selon la direction prédéterminée.

La came peut correspondre à une pièce dédiée à former cette came. On a ainsi recours à une pièce additionnelle pour coopérer avec l'organe de rappel de manière à effectuer ledit guidage.

En variante, la came peut être formée par au moins une portion du volet ou par une portion d'une rondelle montée sur l'arbre. Ladite portion peut encore avoir pour fonction de maintenir axialement l'arbre sur le palier. Selon ces variantes, on ajoute une fonction supplémentaire de coopération avec l'organe de rappel aux fonctions déjà existantes pour le volet ou la rondelle.

Le volet ou la rondelle peut ainsi présenter une partie dont le contour en section est différent de celui du reste dudit volet ou de ladite rondelle et cette partie définit alors la portion formant la came. Ce contour différent est par exemple obtenu par usinage excentrique.

Selon un deuxième mode de réalisation alternatif selon la revendication 1, la ou les cames sont formées par au moins une portion de l'arbre. Cette portion est par exemple obtenue par usinage excentrique.

Similairement à ce qui a été mentionné en rapport avec le premier mode de réalisation, une partie de l'arbre peut avoir un contour différent de façon à former la came.

Selon ces premier et deuxième modes de réalisation, l'organe de rappel est configuré pour venir au contact de ladite came pour guider ledit déplacement radial de l'arbre selon la direction prédéterminée.

Selon le premier ou le deuxième mode de réalisation, la vanne peut comporter deux cames écartées l'une de l'autre le long de l'axe de l'arbre et deux organes de rappel, chaque organe de rappel étant configuré pour venir au contact d'une came respective pour guider ledit déplacement radial de l'arbre selon la direction prédéterminée.

L'emploi de deux cames et de deux organes de rappel distincts peut permettre un guidage optimal dans la direction prédéterminée. Par exemple, chaque came peut être disposée à une extrémité de l'arbre. En variante, chaque came est disposée au voisinage d'une extrémité de l'arbre. L'invention n'est pas limitée à un nombre particulier de cames et d'organes de rappel.

Selon le premier ou le deuxième mode de réalisation, la came peut comprendre au moins un lobe configuré pour venir au contact de l'organe de rappel lors du passage du volet de la position ouverte à la position fermée, ledit contact guidant le déplacement radial de l'arbre selon la direction prédéterminée.

Selon les premier ou deuxième modes de réalisation, l'organe de rappel peut être une lame ressort. Par exemple, la lame ressort est une feuille déformable en acier ressort.

Une telle lame ressort permet d'assurer que le déplacement radial de l'arbre lorsque le volet passe de la position ouverte à la position fermée n'augmente pas les sections de fuite tout en permettant de compenser les différences entre les distances Dc et Dv. La lame ressort s'étend par exemple, dans au moins un plan perpendiculaire à l'axe de l'arbre, autour de la came.

En variante, la lame ressort ne s'étend pas autour de la came dans ledit plan, s'étendant par exemple le long d'une corde du cercle formant la section du logement dans ledit plan.

L'organe de rappel peut être fixé au corps grâce à au moins une encoche ménagée dans la paroi du logement.

Selon les premier ou deuxième modes de réalisation, l'organe de rappel n'est pas fixé à l'arbre, ne venant au contact de ce dernier que lors de son déplacement.

Selon un troisième mode de réalisation, l'organe de rappel est un ressort fixé au corps par une première extrémité et directement ou indirectement à l'arbre par une deuxième extrémité.

En variante de ce troisième mode de réalisation, la deuxième extrémité du ressort est fixée au train d'engrenage lié à l'arbre.

Par exemple, le ressort est un ressort de torsion.

Le ressort de torsion peut être maintenu par une jupe solidaire du train d'engrenage. La fonction de cette jupe est d'assurer un guidage du ressort par l'extérieur de ses spires.

Selon ce troisième mode de réalisation, le ressort est par exemple un ressort de rappel maintenant le volet en position fermée. Ainsi, ce troisième mode de réalisation permet d'ajouter une fonction supplémentaire à une pièce déjà présente dans la vanne. Il n'y a ainsi pas besoin de prévoir une ou plusieurs pièces supplémentaires pour obtenir le guidage du déplacement radial mentionné ci-dessus. Il n'est par exemple pas nécessaire selon ce troisième mode de réalisation d'avoir recours à une ou plusieurs cames pour guider le déplacement radial de l'arbre dans la direction prédéfinie, contrairement au premier et au deuxième mode de réalisation.

Le corps peut présenter un plan de joint du corps venant contacter la première et la deuxième zone de contact du volet lorsque le volet est dans la position fermée et la première et la deuxième zone de contact du volet peut appartenir à un plan de joint du volet.

Le plan définit par l'axe de rotation du volet et le point de contact entre l'extrémité du ressort et le corps peut s'étendre sensiblement perpendiculairement au plan de joint du corps.

Lorsque le volet est dans la position fermée, le plan de joint du corps et le plan de joint du volet peuvent être confondus, chaque zone de contact du volet formant alors avec le plan de joint du corps un contact plan lorsque le volet est dans la position fermée. Le volet peut alors être auto-centreur, du fait que les contacts entre le volet et le corps s'effectuent dans un seul et même plan lorsque le volet est dans la position fermée et qu'un jeu radial existe dans le ou les paliers. Avec une telle vanne, lorsque le volet est dans la position fermée, les contacts entre le volet et le corps peuvent permettre l'immobilisation de l'arbre perpendiculairement au plan de joint unique, sans que l'arbre ne soit au contact du ou des paliers.

Avantageusement, le volet comprend :
- une première partie ayant une première surface dont une portion définit la première zone de contact lorsque le volet est en position fermée,
- une deuxième partie ayant une deuxième surface dont une portion définit la deuxième zone de contact lorsque le volet est en position fermée,
la première surface et la deuxième surface étant partiellement en contact l'une avec l'autre et étant coplanaires, la première partie ayant une longueur mesurée le long de l'axe de l'arbre supérieure à celle de la deuxième partie, et le guidage selon la direction prédéfinie permettant d'éviter que la première partie du volet s'éloigne de la zone du corps venant en contact avec la deuxième zone de contact.

Autrement dit, la première et la deuxième zone de contact appartiennent dans cet exemple à des surfaces opposées du volet tout en étant dans le même plan.

Ainsi, l'organe de rappel contribue à imposer une direction prédéfinie au déplacement radial. Cette direction prédéfinie permet d'éviter qu'en position fermée, des sections de fuite trop importantes n'existent du fait de l'éloignement de la première partie du volet de la zone du corps venant en contact avec la deuxième zone de contact, cet éloignement étant susceptible d'être occasionné par le déplacement de l'arbre grâce au jeu dans le ou les paliers.

En effet, le volet étant selon cet exemple formé par deux parties de longueur différente, les longueurs relatives des première et deuxième parties font qu'il existe une portion du conduit dans le plan de joint du corps qui n'est ni obturée par le corps, ni par le volet bien que ce dernier soit dans la position fermée, formant ainsi une section de fuite.

La direction prédéfinie peut même rapprocher la première partie du volet de la zone du corps venant en contact avec la deuxième zone de contact.

Le guidage radial du volet selon la direction prédéfinie peut avoir alors deux effets bénéfiques : celui mentionné ci-dessus en rapport avec le respect de contraintes dimensionnelles et celui de réduire les sections de fuite dans la position fermée.

La première et la deuxième partie peuvent être chacune une pièce distincte, lesdites pièces étant rigidement couplées entre elles pour former le volet. Chacune de ces pièces est par exemple une plaque. Lesdites pièces sont notamment rigidement couplées entre elles au niveau du plan de joint du volet.

Avantageusement, la partie du conduit dans laquelle le volet se déplace peut être ménagée dans deux pièces du corps rigidement couplées entre elles au niveau du plan de joint du corps. Une partie du plan de joint du corps peut être définie par une deuxième surface d'une de ces pièces du corps qui vient alors en contact avec la partie de la deuxième surface de la deuxième partie du volet formant la deuxième zone de contact lorsque le volet est dans la position fermée tandis qu'une autre partie du plan de joint du corps peut être définie par la première surface d'une autre des pièces du corps qui vient alors en contact avec la partie de la première surface de la première partie du volet formant la première zone de contact lorsque le volet est dans la position fermée.

La vanne peut être une vanne disposée dans le circuit d'admission du moteur thermique, dans le circuit d'échappement du moteur thermique, ou dans une boucle de recirculation des gaz d'échappement permettant à ces derniers d'être réinjectés à l'admission du moteur thermique. Cette boucle de recirculation peut être « basse pression » ou « haute pression ».

La vanne est notamment une vanne dite « deux voies ».

En variante, la vanne peut être une vanne dite « trois voies ». La vanne peut alors être disposée à l'entrée de la boucle de recirculation, c'est-à-dire à l'endroit du circuit d'échappement où prend naissance la boucle de recirculation. La vanne dite « trois voies » peut en variante être disposée à la sortie de la boucle de recirculation, c'est-à-dire à l'endroit du circuit d'admission où les gaz d'échappement sont réinjectés à l'admission.

La vanne est avantageusement dépourvue d'élément flexible interposé entre le volet et le corps lorsque le volet est dans la position fermée. « Flexible » est ici utilisé par opposition à « rigide », le corps et le volet étant alors rigides.

Un tel élément flexible est par exemple un joint d'étanchéité.

Le volet et l'arbre peuvent être reliés par un support s'étendant le long d'au moins une portion de l'arbre. La vanne présente ainsi un arbre déporté par rapport au volet, contrairement aux vannes dans lesquels l'arbre et le volet sont disposés dans de mêmes plans.

En variante, l'arbre et le volet peuvent être disposés dans de mêmes plans.

La distance entre le centre du logement et le plan de joint du corps peut être supérieure à la distance entre le centre de l'arbre et le plan de joint du volet. Cette contrainte dimensionnelle, généralement imposée, permet d'éviter le coincement du volet contre la paroi du conduit lorsque le volet passe dans la position fermée. Lorsque cette contrainte est respectée, le jeu du palier n'est pas nécessaire pour éviter le coincement du volet contre la paroi du conduit. La deuxième zone de contact du volet contre le corps peut permettre d'empêcher un déplacement trop important de l'arbre dans le palier, et ainsi d'empêcher que de trop grandes sections de fuite n'existent lorsque le volet est dans la position fermée. On réduit ainsi l'utilisation du jeu radial disponible dans le ou les paliers, étant donné que le déplacement du volet du fait de ce jeu pour éviter le coincement n'est alors pas nécessaire.

En variante, la distance entre le centre du logement et le plan de joint du corps peut être inférieure à la distance entre le centre de l'arbre et le plan de joint du volet. Ce cas peut se produire bien que l'on ait cherché à respecter la contrainte dimensionnelle ci-dessus, en raison des imprécisions sur les cotes des pièces de la vanne lors de la fabrication de celles-ci. En l'absence d'utilisation du jeu du ou des paliers, ce cas conduit au coincement du volet contre la paroi du conduit lorsque le volet passe dans la position fermée, ce qui empêche normalement d'utiliser une telle vanne. L'utilisation du jeu dans le ou les paliers permet de se ramener au cas précédent dans lequel il n'y a pas de coincement.

Le jeu dans le ou les paliers peut être dimensionné pour être supérieur ou égal à un taux d'imprécision global prédéfini pour le volet et la partie du conduit dans laquelle le volet se déplace, ce taux d'imprécision global prédéfini résultant notamment de la combinaison linéaire de taux d'imprécision unitaires prédéfinis pour chaque cote du volet et de la partie du conduit dans laquelle le volet se déplace. Chaque taux d'imprécision unitaire prédéfini est par exemple fixé en fonction du retour d'expérience sur la technique utilisée pour fabriquer la pièce correspondante de la vanne.

Le volet peut avoir en section une forme rectangulaire et la première zone de contact et la deuxième zone de contact peuvent être situées à des extrémités opposées du volet.

Par exemple, le volet peut avoir en section la forme d'une demi-lune dont le diamètre est prolongé par un rectangle et la première zone de contact peut être située sur le cercle de la demi-lune tandis que la deuxième zone de contact est portée par le côté du rectangle opposé au côté du rectangle confondu avec le diamètre de la demi-lune.

L'invention pourra être mieux comprise à la lecture de la description qui va suivre d'exemples non limitatifs de mise en oeuvre de celle-ci et à l'examen du dessin annexé sur lequel :
- les figures 1 et 2 ont déjà été décrites,

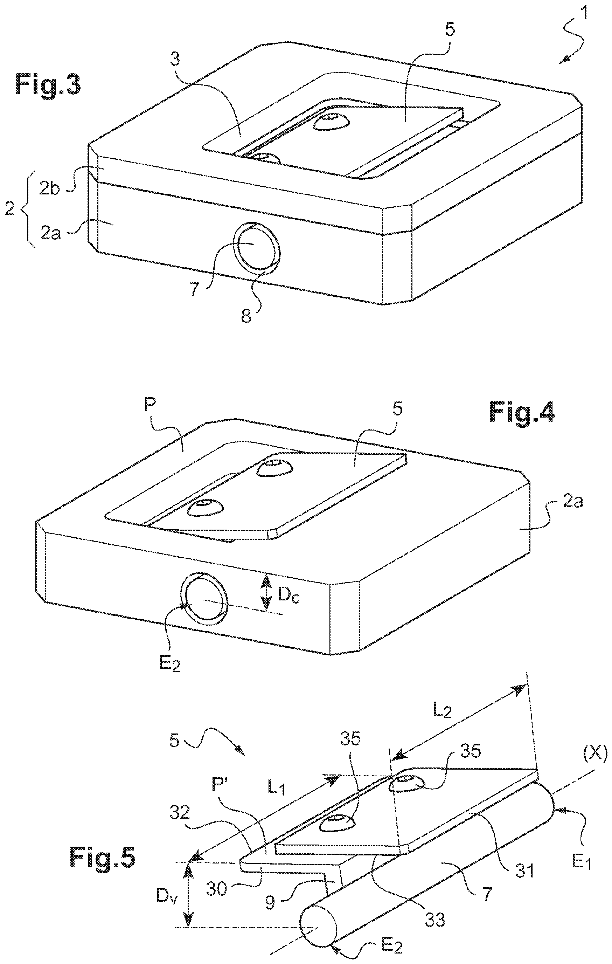

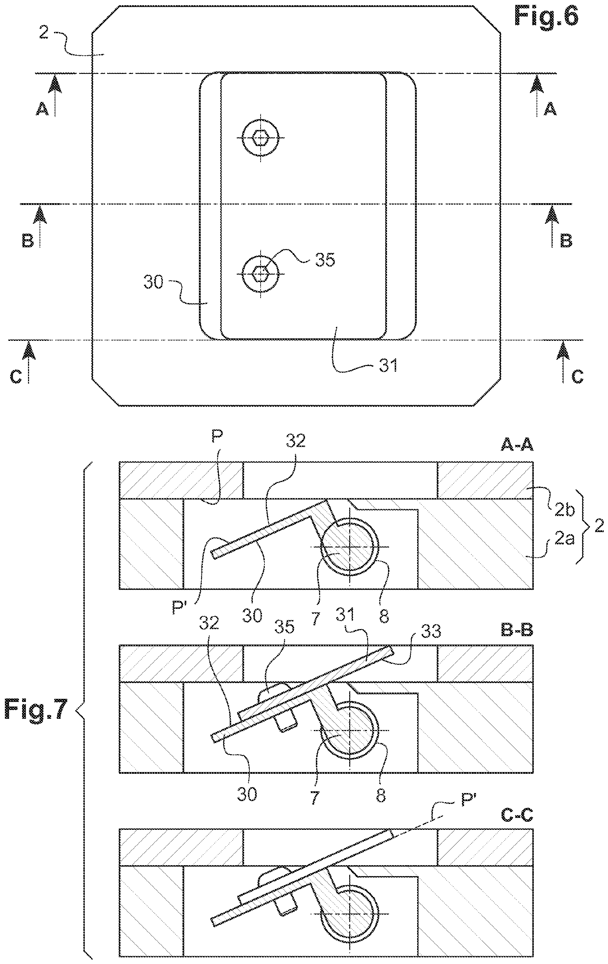

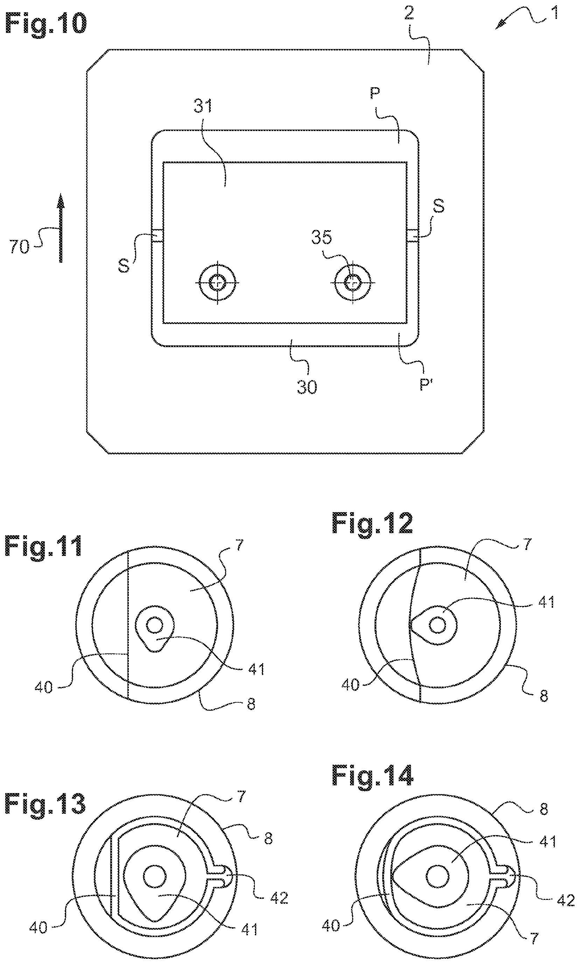

- les figures 3 à 14 se rapportent à une vanne selon un premier mode de réalisation de l'invention, les figures 3 et 4 représentant en élévation la vanne, la figure 5 représentant le volet et l'arbre isolément, la figure 6 étant une vue de dessus de la vanne de la figure 3, les figures 7 à 9 représentant chacune en coupe selon A-A, B-B et C-C une vanne similaire à celle de la figure 6, la figure 10 représentant la vanne de la figure 6 de façon exagérée, les figures 11 et 12 représentent, un détail d'une came et d'un organe de rappel selon le premier mode de réalisation de l'invention, les figures 13 et 14 se rapportent à un détail d'un organe de rappel selon une variante d'un organe de rappel selon le premier mode de réalisation,
- les figures 15 et 16 représentent en élévation et en vue de dessus, un deuxième mode de réalisation de l'invention,
- les figures 17 et 18 représentent en élévation et en vue de dessus, une variante du premier mode de réalisation de l'invention,
- la figure 19 représente, un organe de rappel selon un troisième mode de réalisation de l'invention,

On a représenté sur la figure 3 une vanne 1 selon un premier mode de réalisation de l'invention. Sur cette figure, la vanne 1 est une vanne dite « deux voies » mais l'invention n'y est pas limitée, comme on le verra par la suite.

La vanne 1 qui va être décrite est une vanne utilisée dans un circuit d'air d'un moteur thermique, par exemple utilisé pour propulser un véhicule automobile.

La vanne 1 comprend un corps 2, par exemple réalisé en aluminium, en acier, en plastique ou en inox dans lequel est ménagé un conduit 3. Il s'agit par exemple d'un conduit d'admission, d'échappement ou d'un conduit formant une boucle de recirculation des gaz d'échappement (encore appelée boucle EGR), cette boucle pouvant être une boucle haute pression ou basse pression. Le corps 2 de la vanne peut être réalisé par l'assemblage de deux pièces 2a et 2b, ces deux pièces se contactant selon un plan P dont une paroi définit une partie du conduit 3, comme on le verra par la suite. Le plan P sera appelé « plan de joint » du corps 2 par la suite. Sur la figure 4, la pièce 2b n'est pas représentée.

Le conduit 3 est dans l'exemple considéré parcouru par des gaz pouvant atteindre une température élevée, par exemple jusqu'à 700°C.

Comme représenté sur les figures 3 et 4, la vanne 1 comprend un volet 5 disposé dans le corps et monté pivotant grâce à un arbre 7 reçu dans un logement 8 du corps 2 par l'intermédiaire d'un ou plusieurs paliers non représentés. L'arbre 7 a deux extrémités représentées par E1 et E2. L'arbre 7 s'étend selon une direction X et le ou les paliers présentent un jeu radial par rapport à la direction X permettant à l'arbre 7 de se déplacer radialement dans le palier et dans le logement 8. L'arbre 7 peut se présenter sous la forme d'un cylindre de section transversale circulaire.

Comme représenté sur la figure 5, un support 9 s'étend radialement par rapport à l'arbre 7 et relie l'arbre7 et le volet 5. Le volet 5 est globalement plan et il s'étend perpendiculairement à la direction selon laquelle s'étend le support 9.

Le volet 5 comprend deux parties 30 et 31 formées par des pièces distinctes solidarisées entre elles. Chacune de ces parties se présente sous la forme d'une plaque et la face supérieure 32 de la plaque 30 est rapportée sur la face inférieure 33 de la plaque 31 sans que ces plaques 30 et 31 ne soient exactement superposées. Dans cet exemple, la face supérieure 32 de la plaque 30 et la face inférieure 33 de la plaque 31 sont coplanaires et appartiennent au plan de joint P' du volet 5.

Des vis 35 sont par exemple utilisées pour fixer la plaque 31 avec la plaque 30.

La plaque 30 est dans l'exemple représenté plus proche de l'arbre 7 que la plaque 31, et la plaque 30 est ici raccordée au support 9.

La face supérieure du volet 5 est ici définie par la partie de la face supérieure 32 de la plaque 30 non en regard de la plaque 31 et par la face supérieure de la plaque 31 tandis que la face inférieure du volet 5 est définie par la face inférieure de la plaque 30 et par la partie de la face inférieure 33 de la plaque 31 non en regard de la plaque 30.

Toujours dans cet exemple, comme on peut le voir sur la figure 5, la longueur L1 mesurée le long de la direction X de la plaque 30 est supérieure à la longueur L2 de la plaque 31.

Selon ce premier exemple de mise en oeuvre de l'invention, les deux pièces 2a et 2b du corps sont rigidement couplées entre elles au niveau du plan de joint P du corps 2.

La distance entre le centre du logement 8 et le plan de joint P du corps 2 est désignée par « Dc » et la distance entre le centre de l'arbre 7 et le plan P' est désignée par « Dv ».

Sur la figure 6, la plaque 31 du volet 5 est représentée en position fermée. Des lignes de coupes A-A, B-B et C-C sont représentées au niveau des extrémités du volet 5 et en son centre.

Les figures 7 à 9 représentent chacune trois vues en coupe d'une position du volet 5 lorsque la distance Dc est inférieure à Dv, c'est-à-dire que le plan de joint du volet P' est situé depuis l'arbre 7 au-delà du plan de joint du corps P.

Sur la figure 7, le volet 5 est en position ouverte et il n'est pas en contact avec le corps 2.

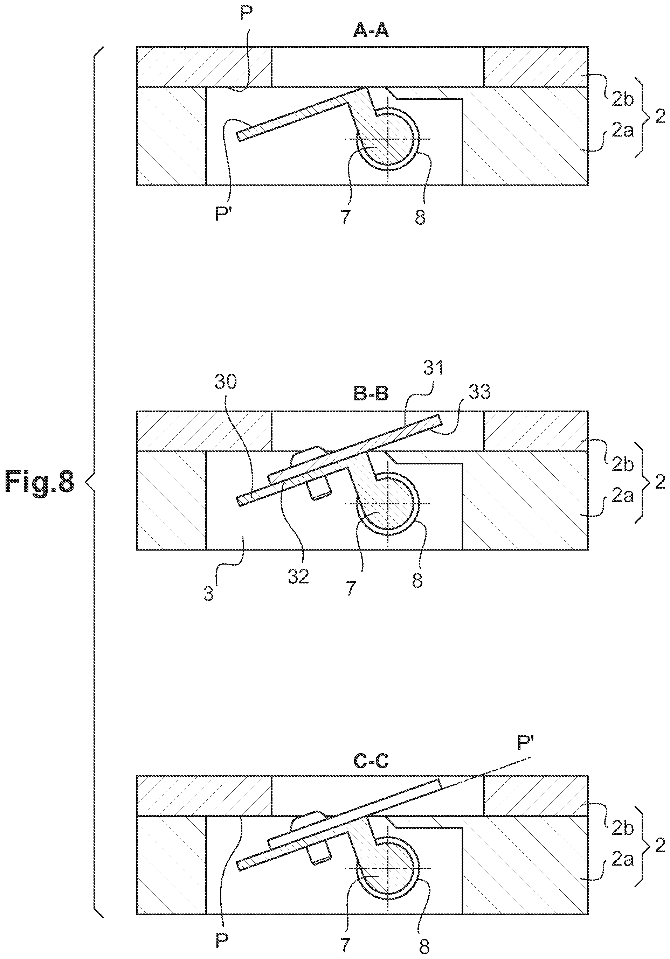

Sur la figure 8, le volet 5 est en cours de passage de la position ouverte vers la position fermée. La face supérieure 32 de la plaque 30 est sur le point de venir en contact avec le plan de joint P du corps 2, ce contact provoquant selon l'art antérieur le coincement du volet 5 dans le conduit 3.

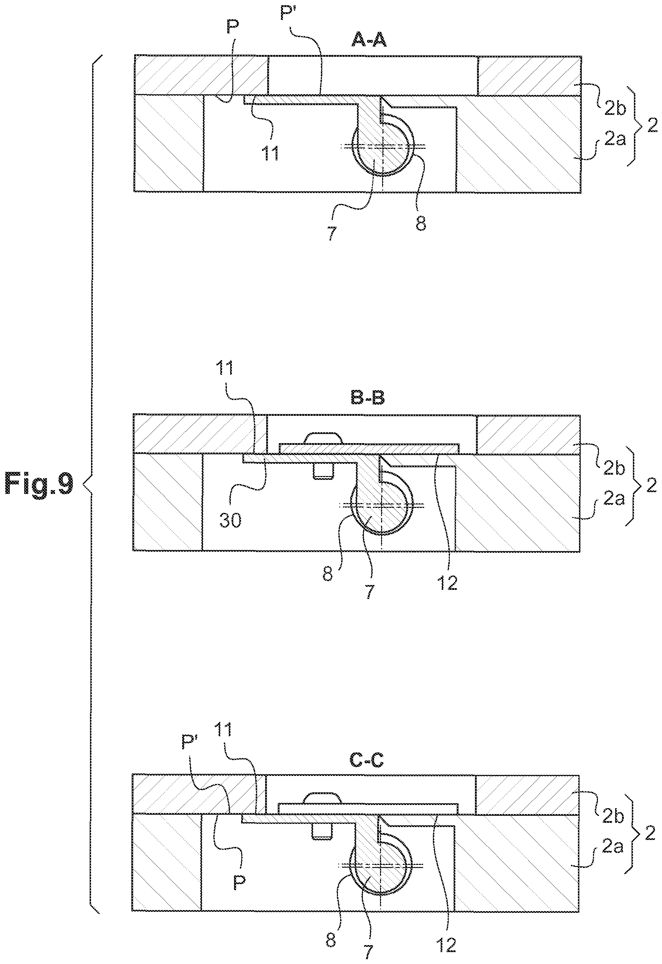

Comme on peut le voir sur la figure 9, grâce au jeu radial existant dans le ou les paliers, l'arbre 7 peut se déplacer radialement, permettant à la plaque 30 de s'éloigner du plan de joint P du corps 2. Le volet 5 peut poursuivre son déplacement jusqu'à atteindre la position fermée dans laquelle il vient en contact avec le plan de joint P du corps 2 par la première zone 11 et la deuxième zone 12. La première zone 11 appartient à la face supérieure 32 de la plaque 30 tandis que la deuxième zone 12 appartient à la face inférieure 33 de la plaque 31. La première zone 11 et la deuxième zone 12 font ainsi partie d'un même plan, à savoir le plan de joint P' du volet 5. Le contact entre le volet 5 et le corps 2 via les première 11 et deuxième 12 zones est ici plan, se faisant exclusivement entre les plans de joint P et P' respectifs.

Comme représenté sur la figure 10 qui représente la vanne 1 selon le premier exemple de mise en oeuvre de l'invention vue de dessus en exagérant la différence entre la longueur L1 de la plaque 30 et la longueur L2 de la plaque 31, du fait de ces longueurs L1 et L2 différentes, en position fermée, deux sections de fuite S existent de part et d'autre de la plaque 31.

Dans le cas où le logement 8 recevant l'arbre 7 a une section transversale circulaire, le déplacement radial peut se faire selon un rayon quelconque. En fonction du rayon selon lequel a lieu ce déplacement, la compensation des différences éventuelles entre les distances Dc et Dv peut s'accompagner d'un déplacement de l'arbre ayant pour effet d'écarter le volet du corps de la vanne donc d'augmenter la surface des sections de fuites S par rapport à la surface qu'elles auraient eu si le déplacement radial avait été dans une direction moins défavorable.

Les figures 11 et 12 représentent de manière schématique, une came 41 et une lame ressort 40, respectivement lorsque le volet 5 est en position ouverte et fermée.

La came 41 est une pièce additionnelle fixée à l'extrémité de l'arbre 7 de sorte qu'elle soit solidaire du mouvement de rotation de l'arbre 7 lors de l'ouverture ou de la fermeture du volet 5. La lame ressort 40 est une autre pièce additionnelle insérée au niveau de chacune de ses deux extrémités dans une encoche aménagé dans le corps 2 de la vanne 1. Cette lame ressort 40 s'étend globalement le long d'une corde du cercle formant la section du logement 8 dans un plan perpendiculaire à l'axe de l'arbre 7. La lame ressort 40 et la came 41 sont logées dans l'espace laissé libre dans le logement 8, entre la paroi extérieure du corps 2 de la vanne 1 et l'extrémité de l'arbre 7. La lame ressort se déforme lorsque le volet arrive dans sa position fermée, le lobe de la came 41 prenant appui sur celle-ci. La déformation de la lame ressort 40 au contact du lobe de la came 41 exerce une force sur la came 41 donc sur l'arbre 7. Cette force guide le déplacement radial de l'arbre selon une direction prédéterminée.

Les figures 13 et 14 représentent de manière schématique, en variante, une lame ressort 40 qui s'étend autour de la came et qui est fixée au corps 2 de la vanne 1, à l'aide d'une encoche 42 ménagée dans la paroi 2.

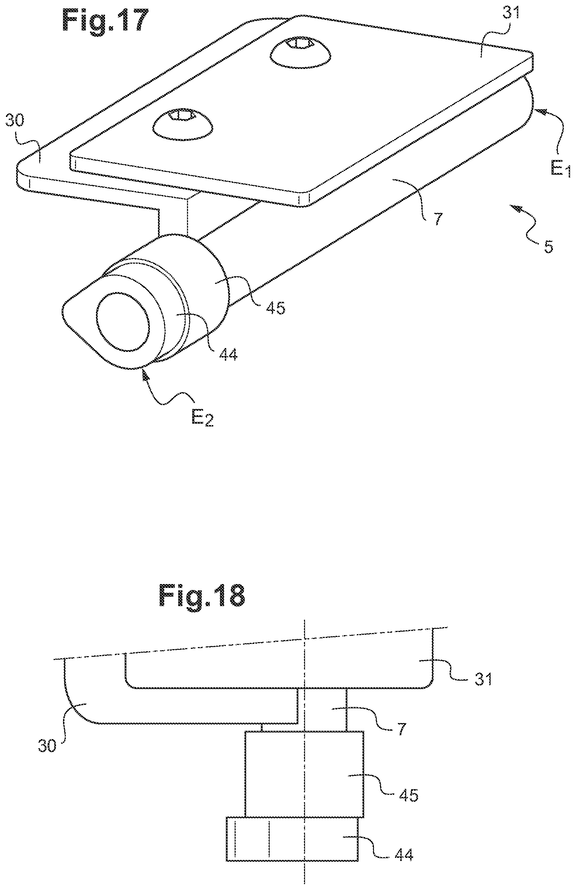

Les figures 17 et 18 représentent en élévation et en vue de dessus, une variante de réalisation de la came selon l'invention dans laquelle la came est formée par une portion d'une rondelle 44 d'arrêt axial. Cette rondelle 44 est soudée sur une extrémité de l'arbre 7 et a pour rôle de maintenir axialement l'arbre dans le palier 45.

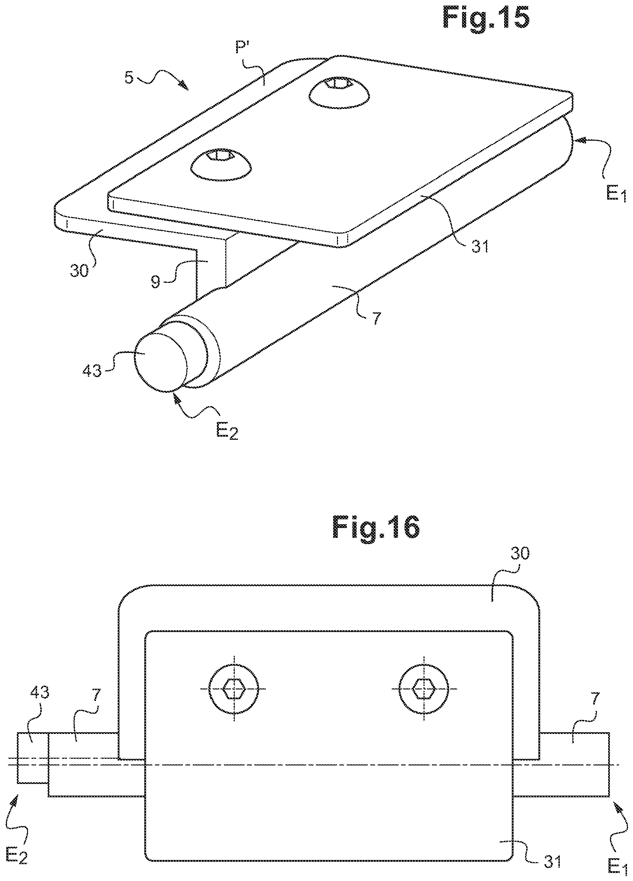

Les figures 15 et 16 représentent en élévation et en vue de dessus, un deuxième mode de réalisation de l'invention. Ces figures représentent le volet 5 relié à l'arbre 7 par le support 9. L'arbre 7 comporte en son extrémité, une portion 43 formant une came. Cette portion est réalisée par usinage excentrique de l'arbre 7.

Dans les exemples de réalisation représentés aux figures 15 à 18, la came est réalisée sans avoir recours à une pièce additionnelle. La came prend appui sur une lame ressort comme représenté sur les figures 11 à 14.

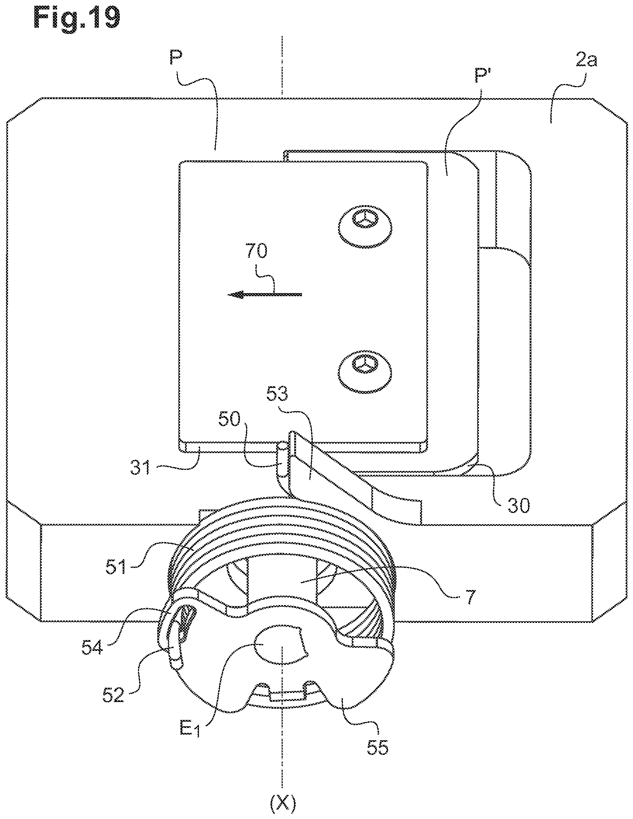

La figure 19 représente un troisième mode de réalisation de l'invention dans lequel un ressort de torsion 51, pour le rappel du volet 5 en position de fermeture, est en outre configuré pour guider le déplacement radial de l'arbre selon une direction prédéterminée 70.

Sur cette figure, le volet 5 est représenté dans sa position de fermeture du conduis 3.

Le ressort de rappel 51 est monté autour de l'arbre 7. Le premier brin 50 de ce ressort 51 vient en appui sur une butée 53 solidaire du corps 2a de la vanne. L'autre brin 52 de ce ressort 51 vient en appui sur une butée 54 ménagée dans une pièce de maintien 55 du ressort 51. Cette pièce de maintien 55 est montée sur une extrémité E1 de l'arbre 7 pour former un ensemble rigide avec celui-ci.

Le brin 50 est fixe, car il est maintenu dans la position dans laquelle il vient au contact de la butée 53, pendant le pivotement du volet 5. Le brin 52 est mobile, car il est entrainé en rotation lors du pivotement du volet 5.

Le plan contenant l'axe X et passant par le point de contact du brin fixe 50 et de la butée 53 est sensiblement perpendiculaire au plant de joint P, afin de guider le volet 5 selon la direction prédéterminée. Cette direction est matérialisée, sur la figure 19, par la flèche 70.

## Revendications

1. Vanne (1), notamment pour moteur thermique, comprenant :
- un corps (2) dans lequel sont ménagés : un logement (8) dans lequel est disposé au moins un palier (45), et un conduit (3) apte à être parcouru par un fluide, et
- un volet (5) monté pivotant dans le corps (2) par un arbre (7) reçu avec jeu radial dans le palier (45),
- au moins un organe de rappel (40 ; 51) fixé au corps (2),
le volet (5) pivotant entre :
- une position ouverte, et
- une position fermée dans laquelle il vient en contact avec le corps (2) par une première zone de contact (11) du volet (5) située d'un premier côté de l'arbre (7) et par une deuxième zone de contact (12) du volet (5) située d'une deuxième côté de l'arbre (7) opposé audit premier côté,
le palier (45) étant configuré pour permettre un déplacement radial de l'arbre (7) dans le palier (45) lors du passage du volet (5) de la position ouverte à la position fermée, et l'organe de rappel (40 ; 51) étant configuré pour guider ledit déplacement radial de l'arbre (7) selon une direction prédéterminée,
- au moins une came (41 ; 43 ; 44) formée par une pièce solidaire de l'arbre (7), ou au moins une came (41 ; 43) formée par une portion de l'arbre (7), l'organe de rappel (40) étant configuré pour venir au contact de ladite came (41 ; 43 ; 44) pour guider ledit déplacement radial de l'arbre (7) selon la direction prédéterminée.

2. Vanne selon la revendication 1, la came (41 ; 43 ; 44) étant formée par une portion du volet (5) ou par une portion d'une rondelle montée sur l'arbre (7).

3. Vanne selon l'une quelconque des revendications 1 ou 2, comportant deux cames (41 ; 43 ; 44) écartées l'une de l'autre le long de l'axe de l'arbre (7) et deux organes de rappel, chaque organe de rappel (40) étant configuré pour venir au contact d'une came (41 ; 43 ; 44) respective pour guider ledit déplacement radial de l'arbre (7) selon la direction prédéterminée.

4. Vanne selon l'une quelconque des revendications 1 à 3, la came (41 ; 43 ; 44) comprenant au moins un lobe configuré pour venir au contact de l'organe de rappel (40) lors du passage du volet (5) de la position ouverte à la position fermée, ledit contact guidant le déplacement radial de l'arbre (7) selon la direction prédéterminée.

5. Vanne selon l'une quelconque des revendications 1 à 4, l'organe de rappel (40) étant une lame ressort.

6. Vanne selon la revendication 1, l'organe de rappel (51) étant un ressort fixé au corps (2) par une première extrémité et directement ou indirectement à l'arbre (7) par une deuxième extrémité.

7. Vanne selon l'une quelconque des revendications précédentes, le volet (5) comprenant :
- une première partie (30) ayant une première surface dont une portion définit la première zone de contact (11) lorsque le volet (5) est en position fermée,
- une deuxième partie (31) ayant une deuxième surface dont une portion définit la deuxième zone de contact (12) lorsque le volet (5) est en position fermée,
la première surface et la deuxième surface étant partiellement en contact l'une avec l'autre et étant coplanaires, la première partie (30) ayant une longueur (L1) mesurée le long de l'axe de l'arbre (7) supérieure la longueur (L2) de la deuxième partie (31), et le guidage selon la direction prédéfinie permettant d'éviter que la première partie (30) du volet (5) s'éloigne de la zone du corps (2) venant en contact avec la deuxième zone de contact (12).

8. Vanne selon la revendication 7, le guidage selon la direction prédéfinie permettant de rapprocher la première partie (30) du volet (5) de la zone du corps (2) venant en contact avec la deuxième zone de contact (12).

9. Vanne selon l'une quelconque des revendications précédentes étant dépourvue d'élément flexible interposé entre le volet (5) et le corps (2) lorsque le volet (5) est dans la position fermée.

## Patentansprüche

1. Ventil (1), insbesondere für einen Wärmekraftmotor, das enthält:
- einen Körper (2), in dem eingerichtet sind: eine Aufnahme (8), in der mindestens ein Lager (45) angeordnet ist, und ein Kanal (3), der von einem Fluid durchflossen werden kann, und
- eine Klappe (5), die im Körper (2) durch eine Welle (7) schwenkbar montiert ist, die mit radialem Spiel im Lager (45) aufgenommen wird,
- mindestens ein am Körper (2) befestigtes Rückstellorgan (40; 51),
wobei die Klappe (5) schwenkt zwischen:
- einer offenen Stellung, und
- einer geschlossenen Stellung, in der sie mit dem Körper (2) durch eine erste Kontaktzone (11) der Klappe (5), die sich auf einer ersten Seite der Welle (7) befindet, und durch eine zweite Kontaktzone (12) der Klappe (5) in Kontakt kommt, die sich auf einer zweiten Seite der Welle (7) entgegengesetzt zur ersten Seite befindet,
wobei das Lager (45) konfiguriert ist, eine radiale Verschiebung der Welle (7) im Lager (45) beim Übergang der Klappe (5) von der offenen Stellung in die geschlossene Stellung zu erlauben, und
das Rückstellorgan (40; 51) konfiguriert ist, die radiale Verschiebung der Welle (7) gemäß einer vorbestimmten Richtung zu führen,
- mindestens eine von einem fest mit der Welle (7) verbundenen Bauteil gebildete Nocke (41; 43; 44) oder mindestens eine von einem Abschnitt der Welle (7) gebildete Nocke (41; 43), wobei das Rückstellorgan (40) konfiguriert ist, mit der Nocke (41; 43; 44) in Kontakt zu kommen, um die radiale Verschiebung der Welle (7) gemäß der vorbestimmten Richtung zu führen.

2. Ventil nach Anspruch 1, wobei die Nocke (41; 43; 44) von einem Abschnitt der Klappe (5) oder von einem Abschnitt einer auf die Welle (7) montierten Scheibe gebildet wird.

3. Ventil nach einem der Ansprüche 1 oder 2, das zwei Nocken (41; 43; 44), die voneinander entlang der Achse der Welle (7) entfernt sind, und zwei Rückstellorgane aufweist, wobei jedes Rückstellorgan (40) konfiguriert ist, mit einer jeweiligen Nocke (41; 43; 44) in Kontakt zu kommen, um die radiale Verschiebung der Welle (7) gemäß der vorbestimmten Richtung zu führen.

4. Ventil nach einem der Ansprüche 1 bis 3, wobei die Nocke (41; 43; 44) mindestens eine Keule aufweist, die konfiguriert ist, beim Übergang der Klappe (5) von der offenen Stellung in die geschlossene Stellung mit dem Rückstellorgan (40) in Kontakt zu kommen, wobei der Kontakt die radiale Verschiebung der Welle (7) gemäß der vorbestimmten Richtung führt.

5. Ventil nach einem der Ansprüche 1 bis 4, wobei das Rückstellorgan (40) eine Blattfeder ist.

6. Ventil nach Anspruch 1, wobei das Rückstellorgan (51) eine Feder ist, die am Körper (2) durch ein erstes Ende und direkt oder indirekt an der Welle (7) durch ein zweites Ende befestigt ist.

7. Ventil nach einem der vorhergehenden Ansprüche, wobei die Klappe (5) enthält:
- einen ersten Teil (30) mit einer ersten Fläche, von der ein Abschnitt die erste Kontaktzone (11) definiert, wenn die Klappe (5) in geschlossener Stellung ist,
- einen zweiten Teil (31) mit einer zweiten Fläche, von der ein Abschnitt die zweite Kontaktzone (12) definiert, wenn die Klappe (5) in geschlossener Stellung ist,
wobei die erste Fläche und die zweite Fläche teilweise miteinander in Kontakt und koplanar sind, wobei der erste Teil (30) eine Länge (L1) gemessen entlang der Achse der Welle (7) größer als die Länge (L2) des zweiten Teils (31) hat, und die Führung gemäß der vordefinierten Richtung es ermöglicht zu verhindern, dass der erste Teil (30) der Klappe (5) sich von der Zone des Körpers (2) entfernt, die mit der zweiten Kontaktzone (12) in Kontakt kommt.

8. Ventil nach Anspruch 7, wobei die Führung gemäß der vordefinierten Richtung es ermöglicht, den ersten Teil (30) der Klappe (5) der Zone des Körpers (2) anzunähern, die mit der zweiten Kontaktzone (12) in Kontakt kommt.

9. Ventil nach einem der vorhergehenden Ansprüche, das kein flexibles Element aufweist, das zwischen die Klappe (5) und den Körper (2) eingefügt wird, wenn die Klappe (5) in der geschlossenen Stellung ist.

## Claims

1. Valve (1), in particular for a combustion engine, comprising:
- a body (2) in which there are formed: a housing (8) in which at least one bearing (45) is arranged, and a duct (3) through which a fluid can flow, and
- a shutter (5) pivotably mounted in the body (2) by means of a shaft (7) received with radial clearance in the bearing (45),
- at least one return member (40; 51) fixed to the body (2),
the shutter (5) pivoting between:
- an open position, and
- a closed position in which it comes into contact with the body (2) by a first contact region (11) of the shutter (5) situated on a first side of the shaft (7) and by a second contact region (12) of the shutter (5) situated on a second side of the shaft (7) opposite the said first side,
the bearing (45) being configured to allow a radial movement of the shaft (7) in the bearing (45) during the passage of the shutter (5) from the open position to the closed position, and the return member (40; 51) being configured to guide the said radial movement of the shaft (7) in a predetermined direction,
- at least one cam (41; 43; 44) formed by a part secured to the shaft (7), or at least one cam (41; 43) formed by a portion of the shaft (7), the return member (40) being configured to come into contact with the said cam (41; 43; 44) to guide the said radial movement of the shaft (7) in the predetermined direction.

2. Valve according to Claim 1, the cam (41; 43; 44) being formed by a portion of the shutter (5) or by a portion of a washer mounted on the shaft (7).

3. Valve according to either one of Claims 1 and 2, comprising two cams (41; 43; 44) spaced apart from one another along the axis of the shaft (7) and two return members, each return member (40) being configured to come into contact with a respective cam (41; 43; 44) to guide the said radial movement of the shaft (7) in the predetermined direction.

4. Valve according to any one of Claims 1 to 3, the cam (41; 43; 44) comprising at least one lobe configured to come into contact with the return member (40) during the passage of the shutter (5) from the open position to the closed position, the said contact guiding the radial movement of the shaft (7) in the predetermined direction.

5. Valve according to any one of Claims 1 to 4, the return member (40) being a leaf spring.

6. Valve according to Claim 1, the return member (51) being a spring fixed to the body (2) by a first end and directly or indirectly to the shaft (7) by a second end.

7. Valve according to any one of the preceding claims, the shutter (5) comprising:
- a first part (30) having a first surface of which a portion defines the first contact region (11) when the shutter (5) is in the closed position,
- a second part (31) having a second surface of which a portion defines the second contact region (12) when the shutter (5) is in the closed position,
the first surface and the second surface being partially in contact with one another and being coplanar, the first part (30) having a length (L1) measured along the axis of the shaft (7) that is greater than the length (L2) of the second part (31), and the guiding in the predefined direction making it possible to avoid the first part (30) of the shutter (5) moving away from the region of the body (2) coming into contact with the second contact region (12).

8. Valve according to Claim 7, the guiding in the predefined direction making it possible to move the first part (30) of the shutter (5) towards the region of the body (2) coming into contact with the second contact region (12).

9. Valve according to any one of the preceding claims being devoid of a flexible element interposed between the shutter (5) and the body (2) when the shutter (5) is in the closed position.
